# EUROPEAN PATENT SPECIFICATION

(11) **EP 1 739 937 B1**
(45) Date of publication and mention of the grant of the patent: **24.03.2010**
(21) Application number: 05014060.7
(22) Date of filing: 29.06.2005
(51) Int. Cl.: H04M 1/725, H04M 1/57

(54) **Electronic equipment and corresponding method for providing a reminder in a wireless communication system**
Elektronisches Gerät und entsprechendes Verfahren zur Bereitstellung einer Erinnerungsnachricht in einem schnurlosen Kommunikationssystem
Appareil électronique et méthode correspondante pour fournir un rappel dans un système de communications sans-fil

(43) Date of publication of application: 03.01.2007
(73) Proprietor: Sony Ericsson Mobile Communications AB, 221 88 Lund (SE)
(72) Inventor: de Léon, David, Nya Vattentornet 221 88 Lund (SE)
(74) Representative: Banzer, Hans-Jörg

(56) References cited:
- EP-A- 1 197 901
- WO-A-02/17602
- WO-A-03/015381
- WO-A-03/056789
- WO-A-2004/093475
- US-A1- 2003 087 665

## Description

### TECHNICAL FIELD OF THE INVENTION

The present invention relates to an electronic equipment for a wireless communication system. Specifically, the present invention relates to the problem of triggering the output of a reminder to the user.

### DESCRIPTION OF RELATED ART

At present, most electronic equipments for a wireless communication system, such as mobile telephones, pagers, personal digital assistants, electronic organisers and so forth, provide the users with a calendar functionality and the possibility of setting reminders within the calendar in order to remind the user of e.g. appointments or other tasks. A general problem with the reminder functionality is to provide the user with a reminder at the most opportune moments, that is to trigger the reminder in the most opportune situations.

A first possibility is to use the time as a trigger for the reminders. That means that a user can input a certain time at which he wants to be reminded and if the internal clock of the electronic equipment reaches said predefined time then the reminder is output to the user.

A second approach is to use spatial location as a trigger for reminders. The user hereby can set a reminder which is coupled either to a certain person or a certain place. As soon as the user with his electronic equipment gets near this predefined place or person then the reminder is output to the user.

A main problem arising with the above-described methods of triggering reminders is that although time and space can both be used to trigger reminders that are related to people neither can be used to decide whether initiating contact is appropriate. If e.g. a reminder triggered by a certain time reminds the user of asking a friend about something, then in this moment when the reminder is output this friend may not be reached. On the other hand, when using the spatial location of a person for triggering a reminder it is still a problem for the user to decide whether initiating contact in this moment is appropriate.

Document WO 2004/093475 A discloses a mobile telephone comprising a reminder controller. The user is able to enter a reminder which is associated with a specific event for triggering the output of the reminder. Hereby it is possible to trigger the reminder upon correspondence with a specific telephone number, e-mail address or internet protocol address. Upon occurrence of the triggering event the reminder is output to the user of the mobile telephone.

Document US 2003/087665 A1 reveals a mobile communication device having a reminder function that may be associated functionally with triggering events and triggering actions associated with the mobile communication device. The user can configure a desired reminder and associate the configured reminder with a triggering event. Upon the occurrence of the triggering event, the reminder is output to the user of the mobile communication device. As an example the reminder can be coupled to an outgoing phone call to a specific phone number.

Document WO 02/17602 A discloses a mobile telephone which can supply or post pre-call information to a caller. The owner of the device is enabled to create text message or other reminders and to couple them to one or more telephone numbers, so that in case a phone call is coming in from one of the selected telephone numbers the caller will receive the text message. Hereby, the caller receives the text message prior to the establishment of the communication line for the phone call, so that the caller after receiving the message can decide whether he still wants to call or not.

Document WO 03/015381 A reveals a communication device comprising a reminder functionality. The user is able to enter a reminder which is associated with a specific entry in the address book for triggering the output of the reminder. Hereby it is possible to trigger the reminder upon correspondence with a specific telephone number or e-mail address. Upon occurrence of the triggering event the reminder is output to the user of the mobile telephone.

Document WO 03/056789 A relates to a user interface and method for viewing communication events on a mobile device. An event database is provided to track all incoming and outgoing communication events with various correspondents. Upon receiving a phone call or an SMS from a specific number, the mobile device will show the user a listing of the most recent events that are associated with the originating address of the phone call or message.

Document EP 1 197 901 A discloses a hand-portable communication terminal, which allows the user to input a reminder and to input a specific time and date for triggering the reminder. Further, the possibility is provided of sending a reminder together with time and date information to another communication terminal which is adapted to decode and store the received reminder so that the reminder on the specified time and date is output to the user of the other communication terminal.

### SUMMARY

It is therefore the object of the present invention to provide an electronic equipment for a wireless communication system as well as a method for operating such an electronic equipment, which enable the output of a reminder thereby improving the prior art.

The above-mentioned object is achieved by an electronic equipment for a wireless communication system according to claim 1.

The electronic equipment according to the present invention comprises a storage for storing identification information for identifying a second electronic equipment and for storing reminders for reminding the user of a certain event, whereby each reminder is coupled to an identification information, a communication means for sending and/or receiving information via the wireless communication system to and/or from the second electronic equipment, a detection means for detecting the identification information of the second electronic equipment when the communication means is establishing a communication with the second electronic equipment and for comparing the identification information of the second electronic equipment with the identification information stored in the storage and an output means for outputting a reminder to the user in case that said reminder is coupled to an identification information which corresponds to the identification of the second electronic equipment, whereby the communication means processes the communication with the second electronic equipment independently of a reminder being coupled to the identification information of the second electronic equipment or not. A decision possibility is provided for a user of the electronic equipment so as to decide during and ongoing call to additionally send the reminder to the second electronic equipment via the wireless communication system.

The above-mentioned object is further achieved by a method for operating an electronic equipment for a wireless communication system according to claim 9.

The method according to the present invention comprises the steps of storing in a storage identification information for identifying a second electronic equipment and storing in said storage reminders for reminding the user of a certain event, whereby each reminder is coupled to an identification information, sending and/or receiving information via the wireless communication system to and/or from the second electronic equipment by a communication means, detecting by a detection means the identification information of the second electronic equipment when the communication means is establishing a communication with the second electronic equipment and comparing by said detection means the identification information of the second electronic equipment with the stored identification information, outputting by an output means a reminder to the user in case that said reminder is coupled to an identification information which corresponds to the identification of the second electronic equipment and processing the communication with the second electronic equipment independently of a reminder being coupled to the identification information of the second electronic equipment or not. The method further comprises providing a decision possibility for a user of the electronic equipment so as to decide during an ongoing call to additionally send the reminder to the second electronic equipment via the wireless communication system.

In the context of the present application and the present invention, the term "electronic equipment for a wireless communication system" includes any kind of portable radio communication equipment. The term "portable radio communication equipment" includes all equipment such as mobile telephones, mobile cell phones, pagers, personal digital assistants, communicators, i.e. electronic organisers, smartphones or the like. The term "wireless communication system" relates to any kind of communication or telecommunication system which enables the wireless transfer of information.

Further, in the context of the present application and the present invention the term "event" includes data, questions, facts, situations, occurrences or any other information, of which the user may be wanted to be reminded.

It should be emphasised that the term "comprises/comprising" when used in this specification is taken to specify the presence of stated features, integers, steps or components but does not preclude the presence or addition of one or more other features, integers, steps, components or groups thereof.

Preferably, an input means is provided for allowing the user to input information.

Further, preferably the storage comprises a phone book for storing identification information and a reminder storage for storing reminders.

Advantageously, a processing unit connected to the storage, the communication means, the detection means, the input means and the output means is provided for submitting data between said components.

Further, advantageously the identification information is a phone number.

In a preferred embodiment the input means serves for inputting the reminder.

Preferably, the input means servers for inputting a text for the reminder.

Further, preferably the output means is a display.

### BRIEF DESCRIPTION OF THE DRAWINGS

In the following description preferred embodiments of the invention are explained in more detail in relation to the enclosed drawings in which
Fig. 1 shows a schematic block diagram of an electronic equipment according to the present invention,
Figs. 2a and 2b show different aspects of a display of an electronic equipment according to the present invention,
Fig. 3 shows a flow chart of the process according to the method of the present invention, and
Fig. 4 shows a possible aspect of the display of the electronic equipment according to the present invention.

### DETAILED DESCRIPTION OF EMBODIMENT

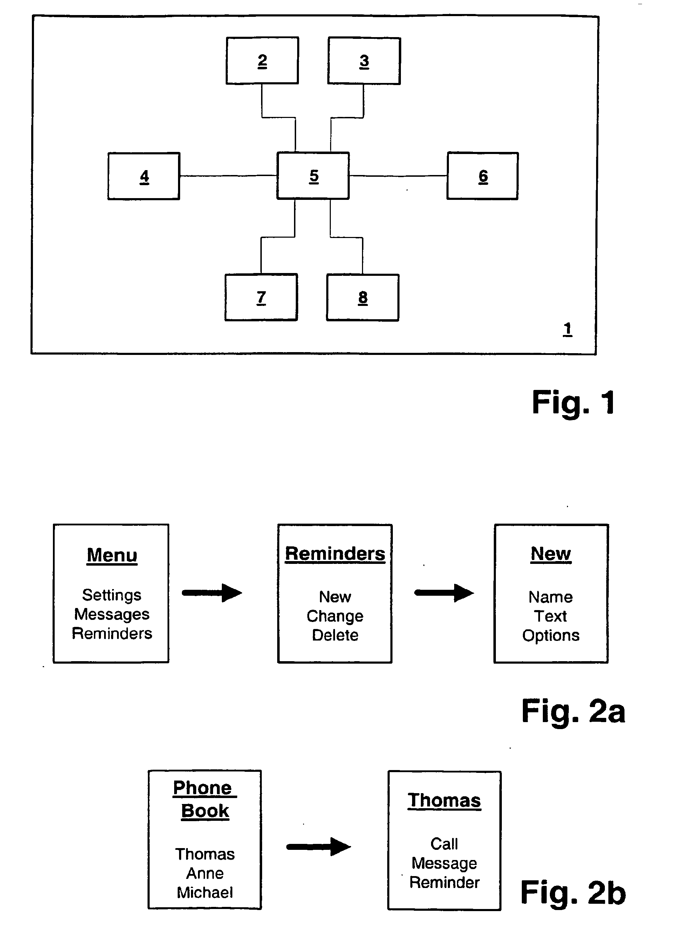

Fig. 1 shows a schematic block diagram of an electronic equipment 1 according to the present invention. The electronic equipment 1 is able to transmit and receive information in a wireless communication system, such as e.g. the UMTS, the GSM or any other available wireless communication system. The term "information" hereby relates to any kind of information which can be transmitted in the wireless communication system, including phone calls, messages of any kind of format and size and so forth.

For the transmission and reception of wireless signals and wireless information in the telecommunication system, the electronic equipment 1 comprises a communication means 6. The communication means 6 hereby comprises all means necessary for sending and/or receiving wireless signals in a telecommunication system, e.g. an antenna connected to a transmitter/receiver, which can e.g. be embodied as an HF unit in case of a GSM or a UMTS system. It is to be noted, that the electronic equipment 1 in practice comprises all necessary means and units to be operated in the respective wireless communication system. For the sake of clarity, Fig. 1 and the present description only shows and relates to the functionalities which are necessary to understand the present invention.

The communication means 6 is connected to a central control unit 5, which can e.g. be embodied in a microprocessor, central processing unit or the like. The central control unit 5 controls the operation of the electronic equipment 1. The central control unit 5 is further connected to an input means 7 and an output means 8. The input means 7 serves for inputting information either by the user or by another electronic equipment or any other electronic device. The input means may be a key pad, a touch pad recognition of speech, an interface for transmission via cable or wireless transmission, e.g. infrared or Bluetooth or any other means that enables the input of information. The output means 8 serves for outputting information to the user or to any other electronic device and may be a display, a loudspeaker or an interface for enabling transmission of data and/or information via cable or any wireless means. In case that the electronic equipment 1 is a portable cell phone, then the input means 7 corresponds to the usual input keys enabling a user to input numbers, characters and symbols and the output means 8 corresponds to a display and/or loudspeakers.

The central control unit 5 is further connected to a storage 2, 3 for storing any kind of data and/or information. Specifically, according to the present invention the storage may comprise several separated storages, e.g. a phonebook 2 for storing identification information, e.g. phone numbers, e-mail addresses and the like and additional information relating to the identity such as names, images and/or the like. These identification information serve for identifying a second electronic equipment. In a simple embodiment in the phonebook 2 just pairs of phone numbers and names of communication partners are stored. The storage may further comprise a reminder storage 3 for storing reminders, whereby these reminders serve for reminding the user of a certain event.

The central control unit 5 is further connected to a detection means 4. In case that the communication means 6 establishes a communication to a second electronic equipment, i.e. sends or receives information via the wireless communication system to and/or from the second electronic equipment, then the detection means 4 is able to detect the identification information of the second electronic equipment and to compare the identification information of the second electronic equipment with the identification information stored in the storage 2, 3. As already explained, such identification information may be phone numbers, e-mail addresses or the like.

The main idea underlying the present invention is to couple a reminder to an identification information stored in the phonebook 2. The reminder is only output to the user in case that the communication means 6 is sending and/or receiving information via the wireless communication system to a second electronic equipment which corresponds to the identification information stored in the phonebook.

Fig. 2a shows a first example of inputting a reminder via the input means 7. Herefor, on the display of the electronic equipment the menu options may be shown, e.g. settings, messages and reminders. In case the user selects the menu option of reminders, then in a further display as shown in Fig. 2a the user in turn in a sub-menu can choose between editing a new reminder, changing an already existing reminder or deleting and already existing reminder. In the present example according to Fig. 2a in case the user selects to edit a new reminder then the user is asked to input a name or any other identification information to which the reminder has to be coupled. Said name or identification information to which the reminder has to be coupled, can be chosen by the user either from the identification information already stored in the phone book or can be newly input by the user and afterwards stored as new entry in the phone book. That means that the reminder is stored in the reminder storage 3 and that each reminder is coupled to an identification information stored in the phonebook which may be a name, a phone number, an e-mail address or the like. Further, according to Fig. 2a, the user may have the possibility to input a specific text for the reminder. In this case the output means 8 when outputting the reminder will not only show the fact that a reminder is present but will also show or output via loudspeakers or any other output means the text input by the user. Further, according to Fig. 2a, the user may also have the possibility to select between further options. For example, the reminder may only be output as an acoustic alert, a combined optical and acoustic alert or just as an optical sign on the display.

A second possibility for inputting a reminder is shown in Fig. 2b. Hereby, the user in the phonebook 2 of the electronic equipment can choose between different contacts he has stored in the phonebook 2. If e.g. he selects a specific contact as in Fig. 2b the contact "Thomas", then in a further sub-menu the user may choose between setting a call to the selected contact, sending a message to the selected contact or editing a reminder which then will be coupled to the selected identification information.

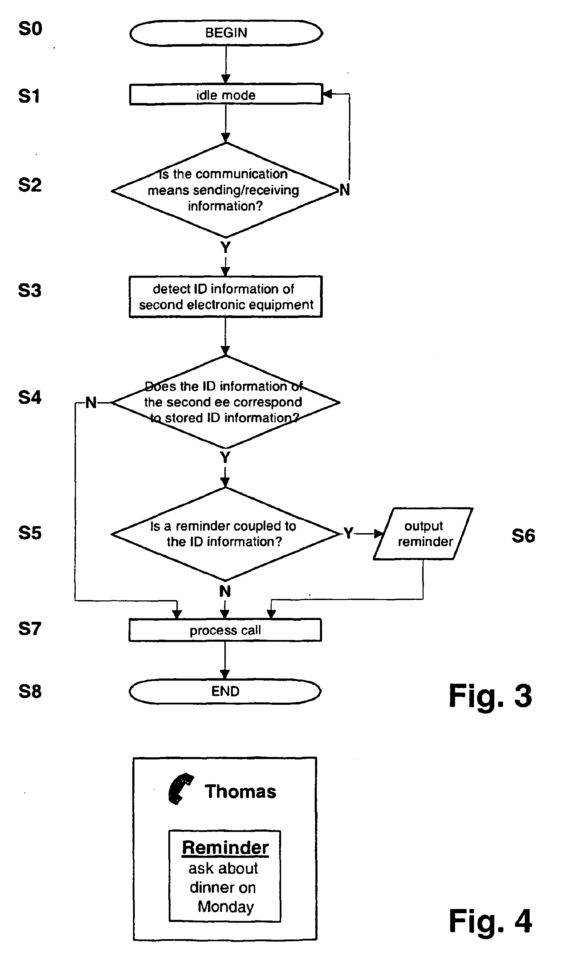

The process for deciding if a stored reminder is output to the user is shown in the flow chart in Fig. 3. The process begins in step S0 e.g. with switching on the electronic equipment 1. In step S1 the electronic equipment 1 is in an idle mode or a standby mode. If this idle or standby mode is stopped in step S2 then it is decided if the communication means 6 is establishing a communication to the second electronic equipment, i.e. sending/receiving information via the wireless communication system. In case that the communication means is not active then the process turns back to step S1. In case that the communication means is sending and/or receiving information via the wireless communication system, then in step S3 the detection means will detect the identification information of the second electronic equipment to which the communication means 6 is sending information or from which the communication means 6 is receiving information and in a further step S4 the detection means checks if the identification information of the second electronic equipment corresponds to a stored identification information. If the identification information of the second electronic equipment corresponds to an identification information stored in the phonebook 2 of the electronic equipment 1, then in the next step S5 it is checked if a reminder is coupled to this identification information. Otherwise, the process continues with step S7 and the call is normally processed. If in step S5 it is decided that no reminder is coupled to the identification information then the process also further goes on with step S7 where the call is normally processed. Otherwise if in step S5 is detected that a reminder is coupled to the identification information then the respective reminder is output to the user by the output means 8. The process then in any case continues with step S7 where the call is normally processed. The whole process ends in step S8 e.g. with switching off the electronic equipment 1, with ending the call and/or with deleting the outputted reminder.

Fig. 4 shows an example of outputting a reminder to the user. In the example of Fig. 4 a display of the electronic equipment is shown in case that e.g. a person for which identification information is stored in the phone book 2 is calling. In the example of Fig. 4 a person stored as "Thomas" is calling. In case that for this identification information a reminder is stored then this reminder will also be output on the display. If the user in addition has inserted a text as was explained above, this text may also be shown on the display. This way the user when he looks at the display to see which person is calling, will automatically see the reminder he set for that specific person or identification information.

The reminder is not only output to the user of the electronic equipment 1 but also sent by the communication means 6 to the second electronic equipment via the wireless communication system. This feature to share the reminder with the user of the second electronic equipment may be implemented automatically or the user has the possibility to choose it manually. Further, the user has the possibility to decide during an ongoing call to send the reminder to the second electronic equipment, e.g. by pressing a predefined key. The reminder then is output in the second electronic equipment as a message, a picture on the display, an acoustic alert or in any other way.

The invention provides a form of reminding that is highly relevant to the person-oriented nature of electronic equipments. Effective communication between individuals is facilitated by providing the relevant information at the most opportune time, that means that the user is reminded of an event right at the moment that he is going to talk to a person to which the reminder is coupled.

## Claims

1. Electronic equipment for a wireless communication system comprising
a storage (2, 3) for storing identification information for identifying a second electronic equipment and for storing reminders for reminding the user of a certain event, whereby each reminder is coupled to an identification information,
a communication means (6) for sending and/or receiving information via the wireless communication system to and/or from the second electronic equipment,
a detection means (4) for detecting the identification information of the second electronic equipment when the communication means (6) is establishing a communication with the second electronic equipment and for comparing the identification information of the second electronic equipment with the identification information stored in the storage (2, 3) and
an output means (8) for outputting a reminder to the user in case that said reminder is coupled to an identification information which corresponds to the identification of the second electronic equipment,
whereby the communication means (6) is adapted to processe the communication with the second electronic equipment independently of a reminder being coupled to the identification information of the second electronic equipment or not,
**characterised in that** the electronic equipment further comprises means for providing a decision possibility for a user of the electronic equipment so as to decide during an ongoing call to additionally send the reminder to the second electronic equipment via the wireless communication system.

2. Electronic equipment according to claim 1,
whereby an input means (7) is provided for allowing the user to input information.

3. Electronic equipment according to claim 1 or 2,
whereby the storage (2, 3) comprises a phone book (2) for storing identification information and a reminder storage (3) for storing reminders.

4. Electronic equipment according to claim 3,
whereby a processing unit (5) connected to the storage (2, 3), the communication means (6), the detection means (4), the input means (7) and the output means (8) is provided for submitting data between said components.

5. Electronic equipment according to any of claims 1 to 4,
whereby the identification information is a phone number.

6. Electronic equipment according to claim 2,
whereby the input means (7) serves for inputting the reminder.

7. Electronic equipment according to claim 6,
whereby the input means (7) serves for inputting a text for the reminder.

8. Electronic equipment according to any of claims 1 to 7,
whereby the output means (8) is a display.

9. Method for operating an electronic equipment for a wireless communication system, comprising the steps of
storing in a storage (2, 3) identification information for identifying a second electronic equipment and storing in said storage (2, 3) reminders for reminding the user of a certain event, whereby each reminder is coupled to an identification information, sending and/or receiving information via the wireless communication system to and/or from the second electronic equipment by a communication means (6),
detecting by a detection means (4) the identification information of the second electronic equipment when the communication means (6) is establishing a communication with the second electronic equipment and comparing by said detection means (4) the identification information of the second electronic equipment with the stored identification information,
outputting by an output means (8) a reminder to the user in case that said reminder is coupled to an identification information which corresponds to the identification of the second electronic equipment and
processing the communication with the second electronic equipment independently of a reminder being coupled to the identification information of the second electronic equipment or not,
**characterised by**
providing a decision possibility for a user of the electronic equipment so as to decide during an ongoing call to additionally send the reminder to the second electronic equipment via the wireless communication system.

10. Method according to claim 9,
whereby an input means (7) is provided for allowing the user to input information..

11. Method according to claim 9 or 10,
whereby the storage (2, 3) comprises a phone book (2) for storing identification information and a reminder storage (3) for storing reminders.

12. Method according to claim 11,
whereby a processing unit (5) connected to the storage (2, 3), the communication means (6), the detection means (4), the input means (7) and the output means (8) is provided for submitting data between said components.

13. Method according to any of claims 9 to 12,
whereby the identification information is a phone number.

14. Method according to claim 10,
whereby the input means (7) serves for inputting the reminder.

15. Method according to claim 14,
whereby the input means (7) servers for inputting a text for the reminder.

16. Method according to any of claims 9 to 15,
whereby the output means (8) is a display.

## Patentansprüche

1. Elektronische Einrichtung für ein drahtloses Kommunikationssystem, umfassend
einen Speicher (2, 3) zum Speichern einer Identifikationsinformation zum Identifizieren einer zweiten elektronischen Einrichtung und zum Speichern einer Erinnerung zum Erinnern des Benutzers an ein bestimmtes Ereignis, wobei jede Erinnerung mit einer Identifikationsinformation gekoppelt ist,
ein Kommunikationsmittel (6) zum Senden und/oder Empfangen einer Information über das drahtlose Kommunikationssystem zu und/oder von der zweiten elektronischen Einrichtung,
ein Erfassungsmittel (4) zum Erfassen der Identifikationsinformation der zweiten elektronischen Einrichtung, wenn das Kommunikationsmittel (6) eine Kommunikation mit der zweiten elektronischen Einrichtung einrichtet, und zum Vergleichen der Identifikationsinformation der zweiten elektronischen Einrichtung mit der Identifikationsinformation, welche in dem Speicher (2, 3) gespeichert ist, und
ein Ausgabemittel (8) zum Ausgeben einer Erinnerung an den Benutzer falls die Erinnerung mit einer Identifikationsinformation gekoppelt ist, welche der Identifikation der zweiten elektronischen Einrichtung entspricht,
wobei das Kommunikationsmittel (6) ausgestaltet ist, die Kommunikation mit der zweiten elektronischen Einrichtung unabhängig davon, ob eine Erinnerung mit der Identifikationsinformation der zweiten elektronischen Einrichtung gekoppelt ist oder nicht, zu verarbeiten,
**dadurch gekennzeichnet, dass** die elektronische Einrichtung ferner ein Mittel zum Bereitstellen einer Entscheidungsmöglichkeit für einen Benutzer der elektronischen Einrichtung bereitstellt, um während eines laufenden Anrufs zu entscheiden, die Erinnerung zu der zweiten elektronischen Einrichtung über das drahtlose Kommunikationssystem zusätzlich zu senden.

2. Elektronische Einrichtung nach Anspruch 1,
wobei ein Eingabemittel (7) vorgesehen ist, um dem Benutzer zu ermöglichen, eine Information einzugeben.

3. Elektronische Einrichtung nach Anspruch 1 oder 2,
wobei der Speicher (2, 3) ein Telefonbuch (2) zum Speichern einer Identifikationsinformation und einen Erinnerungsspeicher (3) zum Speichern von Erinnerungen umfasst.

4. Elektronische Einrichtung nach Anspruch 3,
wobei eine Verarbeitungseinheit (5), welche mit dem Speicher (2, 3), dem Kommunikationsmittel (6), dem Erfassungsmittel (4), dem Eingabemittel (7) und dem Ausgabemittel (8) verbunden ist, vorgesehen ist, um Daten zwischen den Komponenten zu überreichen.

5. Elektronische Einrichtung nach einem der Ansprüche 1-4,
wobei die Identifikationsinformation eine Telefonnummer ist.

6. Elektronische Einrichtung nach Anspruch 2,
wobei das Eingabemittel (7) zum Eingeben der Erinnerung dient.

7. Elektronische Einrichtung nach Anspruch 6,
wobei das Eingabemittel (7) zum Eingeben eines Texts für die Erinnerung dient.

8. Elektronische Einrichtung nach einem der Ansprüche 1-7,
wobei das Ausgabemittel (8) eine Anzeigeeinrichtung ist.

9. Verfahren zum Betreiben einer elektronischen Einrichtung für ein drahtloses Kommunikationssystem, umfassend die Schritte:
Speichern einer Identifikationsinformation zum Identifizieren einer zweiten elektronischen Einrichtung in einem Speicher (2, 3) und zum Speichern von Erinnerungen zum Erinnern des Benutzers an ein bestimmtes Ereignis in dem Speicher (2, 3), wobei jede Erinnerung mit einer Identifikationsinformation gekoppelt ist,
Senden und/oder Empfangen einer Information über das drahtlose Kommunikationssystem zu und/oder von der zweiten elektronischen Vorrichtung über ein Kommunikationsmittel (6), Erfassen der Identifikationsinformation der zweiten elektronischen Einrichtung mit einem Erfassungsmittel (4), wenn das Kommunikationsmittel (6) eine Kommunikation mit der zweiten elektronischen Einrichtung einrichtet, und Vergleichen der Identifikationsinformation der zweiten elektronischen Einrichtung mit der gespeicherten Identifikationsinformation mit dem Erfassungsmittel (4),
Ausgeben einer Erinnerung an den Benutzer über das Ausgabemittel (8), falls die Erinnerung mit einer Identifikationsinformation gekoppelt ist, welche der Identifikation der zweiten elektronischen Einrichtung entspricht, und
Verarbeiten der Kommunikation mit der zweiten elektronischen Einrichtung unabhängig davon, ob eine Erinnerung mit der Identifikationsinformation der zweiten elektronischen Einrichtung gekoppelt ist oder nicht,
**gekennzeichnet durch**
Bereitstellen einer Entscheidungsmöglichkeit für einen Benutzer der elektronischen Einrichtung, um während eines laufenden Anrufs zu entscheiden, die Erinnerung zu der zweiten elektronischen Einrichtung über das drahtlose Kommunikationssystem zusätzlich zu senden.

10. Verfahren nach Anspruch 9,
wobei ein Eingangsmittel (7) bereitgestellt wird, um dem Benutzer zu ermöglichen, eine Information einzugeben.

11. Verfahren nach Anspruch 9 oder 10,
wobei der Speicher (2, 3) ein Telefonbuch (2) zum Speichern von Identifikationsinformationen und einen Erinnerungsspeicher (3) zum Speichern von Erinnerungen umfasst.

12. Verfahren nach Anspruch 11,
wobei eine Verarbeitungseinheit (5), welche mit dem Speicher (2, 3), dem Kommunikationsmittel (6), dem Erfassungsmittel (4), dem Eingabemittel (7) und dem Ausgabemittel (8) verbunden ist, zum Überreichen von Daten zwischen den Komponenten vorgesehen ist.

13. Verfahren nach einem der Ansprüche 9-12,
wobei die Identifikationsinformation eine Telefonnummer ist.

14. Verfahren nach Anspruch 10,
wobei das Eingabemittel (7) zum Eingeben der Erinnerung dient.

15. Verfahren nach Anspruch 14,
wobei das Eingabemittel (7) zum Eingeben eines Textes für die Erinnerung dient.

16. Verfahren nach einem der Ansprüche 9-15,
wobei das Ausgabemittel (8) eine Anzeigeeinrichtung ist.

## Revendications

1. Équipement électronique destiné à un système de communication sans fil, comprenant :
une mémoire (2, 3), destinée à stocker des informations d'identification afin d'identifier un second équipement électronique et à stocker des aide-mémoire destinés à rappeler un certain événement à l'utilisateur, chaque aide-mémoire étant associé à des informations d'identification ;
un moyen de communication (6), destiné à émettre et/ou recevoir des informations via le système de communication sans fil, à destination et/ou en provenance du second équipement électronique ;
un moyen de détection (4), destiné à détecter les informations d'identification du second équipement électronique lorsque le moyen de communication (6) établit une communication avec le second équipement électronique et à comparer les informations d'identification du second équipement électronique avec les informations d'identification stockées dans la mémoire (2, 3) ; et
un moyen de sortie (8), destiné à produire en sortie un aide-mémoire à destination de l'utilisateur si ledit aide-mémoire est associé à des informations d'identification qui correspondent à l'identification du second équipement électronique ;
dans lequel le moyen de communication (6) est conçu pour traiter la communication avec le second équipement électronique indépendamment du fait qu'un aide-mémoire est ou non associé aux informations d'identification du second équipement électronique ;
**caractérisé en ce que** l'équipement électronique comprend en outre un moyen destiné à fournir une possibilité de décision à l'utilisateur de l'équipement électronique, afin qu'il décide pendant un appel d'envoyer en outre l'aide-mémoire au second équipement électronique via le système de communication sans fil.

2. Équipement électronique selon la revendication 1, dans lequel un moyen d'entrée (7) est fourni pour permettre à l'utilisateur d'entrer des informations.

3. Équipement électronique selon la revendication 1 ou 2, dans lequel la mémoire (2, 3) comprend un carnet d'adresses (2) pour stocker des informations d'identification et une mémoire d'aide-mémoire (3) pour stocker des aide-mémoire.

4. Équipement électronique selon la revendication 3, dans lequel il est fourni une unité de traitement (5) connectée à la mémoire (2, 3), au moyen de communication (6), au moyen de détection (4), au moyen d'entrée (7) et au moyen de sortie (8) pour soumettre des données entre lesdits composants.

5. Équipement électronique selon l'une quelconque des revendications 1 à 4, dans lequel les informations d'identification sont un numéro de téléphone.

6. Équipement électronique selon la revendication 2, dans lequel le moyen d'entrée (7) sert à saisir l'aide-mémoire.

7. Équipement électronique selon la revendication 6, dans lequel le moyen d'entrée (7) sert à saisir un texte pour l'aide-mémoire.

8. Équipement électronique selon l'une quelconque des revendications 1 à 7, dans lequel le moyen de sortie (8) est un écran d'affichage.

9. Procédé de fonctionnement d'un équipement électronique destiné à un système de communication sans fil, comprenant les étapes consistant à :
stocker dans une mémoire (2, 3) des informations d'identification afin d'identifier un second équipement électronique et stocker dans ladite mémoire (2, 3) des aide-mémoire destinés à rappeler un certain événement à l'utilisateur, chaque aide-mémoire étant associé à des informations d'identification ;
émettre et/ou recevoir des informations via le système de communication sans fil, à destination et/ou en provenance du second équipement électronique, à l'aide d'un moyen de communication (6) ;
détecter à l'aide d'un moyen de détection (4) les informations d'identification du second équipement électronique lorsque le moyen de communication (6) établit une communication avec le second équipement électronique et comparer à l'aide dudit moyen de détection (4) les informations d'identification du second équipement électronique avec les informations d'identification mémorisées ;
produire en sortie, à l'aide d'un moyen de sortie (8), un aide-mémoire destiné à l'utilisateur si ledit aide-mémoire est associé à des informations d'identification qui correspondent à l'identification du second équipement électronique ; et
traiter la communication avec le second équipement électronique indépendamment du fait qu'un aide-mémoire est ou non associé aux informations d'identification du second équipement électronique ;
**caractérisé par** l'étape consistant à :
fournir une possibilité de décision à l'utilisateur de l'équipement électronique, afin qu'il décide pendant un appel entrant d'envoyer en outre l'aide-mémoire au second équipement électronique via le système de communication sans fil.

10. Procédé selon la revendication 9, dans lequel un moyen d'entrée (7) est fourni pour permettre à l'utilisateur d'entrer des informations.

11. Procédé selon la revendication 9 ou 10, dans lequel la mémoire (2, 3) comprend un carnet d'adresses (2) pour stocker des informations d'identification et une mémoire d'aide-mémoire (3) pour stocker des aide-mémoire.

12. Procédé selon la revendication 11, dans lequel il est fourni une unité de traitement (5) connectée à la mémoire (2, 3), au moyen de communication (6), au moyen de détection (4), au moyen d'entrée (7) et au moyen de sortie (8) pour soumettre des données entre lesdits composants.

13. Procédé selon l'une quelconque des revendications 9 à 12, dans lequel les informations d'identification sont un numéro de téléphone.

14. Procédé selon la revendication 10, dans lequel le moyen d'entrée (7) sert à saisir l'aide-mémoire.

15. Procédé selon la revendication 14, dans lequel le moyen d'entrée (7) sert à saisir un texte pour l'aide-mémoire.

16. Procédé selon l'une quelconque des revendications 9 à 15, dans lequel le moyen de sortie (8) est un écran d'affichage.
